(19) Europäisches Patentamt
European Patent Office
Office européen des brevets

(11) Publication number: 0 235 243
B1

(12) # EUROPEAN PATENT SPECIFICATION

(45) Date of publication of patent specification: **08.02.89**

(51) Int. Cl.⁴: **B 01 D 53/14,** C 01 B 17/60

(21) Application number: **86905446.0**

(22) Date of filing: **16.09.86**

(86) International application number:
**PCT/NO86/00064**

(87) International publication number:
**WO 87/01612 26.03.87 Gazette 87/07**

(54) **PROCESS FOR THE RECOVERY OF SULPHUR DIOXIDE FROM GAS FLOWS.**

(30) Priority: **16.09.85 NO 853622**

(43) Date of publication of application:
**09.09.87 Bulletin 87/37**

(45) Publication of the grant of the patent:
**08.02.89 Bulletin 89/06**

(84) Designated Contracting States:
**AT BE CH DE FR GB IT LI LU NL SE**

(56) References cited:
**SE-A- 84 645**
**SE-A- 92 982**
**SE-B- 387 319**
**SE-B- 405 109**
**US-A-3 633 339**

(73) Proprietor: **SINTEF**
**N-7034 Trondheim NTH (NO)**

(72) Inventor: **ERGA, Olav**
**Eikveien 7**
**N-7058 Jakobsli (NO)**

(74) Representative: **Pett, Christopher Phineas et al**
**Frank B.Dehn & Co. Imperial House 15-19**
**Kingsway**
**London WC2B 6UZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 235 243 B1

## Description

The present invention relates to a process for the purification of $SO_2$ containing gases, recovery of $SO_2$ by means of an absorption solution, and regeneration of this solution. In particular the invention relates to the use of aqueous buffer solutions as absorption liquid.

Two main types of processes in which such aqueous buffer solutions are used, are:

Process type 1. "Regular absorption-stripping processes" where the absorption of $SO_2$ takes place in towers in which gas and liquid flow pass each other countercurrently, and where the liquid is regenerated by stripping with open steam in other towers which are also operated countercurrently. Little or no change in volume of the liquid stream takes place during the regeneration.

Concentrated $SO_2$ is obtained after condensation of steam from the steam-$SO_2$ mixture leaving the stripping unit, while the flow of stripped liquid is conveyed back to the absorption tower for new $SO_2$ absorption. The stripping may take place at the same temperature as in the absorption tower or at a higher temperature. In this type of process only clear liquid and gas are circulating, which simplifies its operation.

Process type 2. Absorption is carried out as for type 1, but the regeneration takes place by evaporation, in which a steam-$SO_2$ mixture is driven off, while at the same time the most basic buffer component is precipitated by crystallisation. Concentrated $SO_2$ is obtained as in type 1, while regenerated absorption liquid ready for new absorption may be obtained after dissolution of the buffer crystals in water (or condensate).

As buffer in process type 1 Na-citrates may for instance be used (1). A characteristic feature of said type of process is that the pH in the absorber must be kept almost constant and at a relatively low level in order to accomplish the regeneration by means of regular steam-stripping. This type of process is particularly suitable for gases having a relatively high $SO_2$ content, where the consumption of stripping steam per ton of $SO_2$ produced gets low enough.

The most commonly used buffer in process type 2 is Na-sulphite, $Na_2SO_3$ (2). The reactions utilized in this "sulphite-process" are the following:

Absorption: $SO_{2(g)}=SO_{2(1)}$ $SO_{2(1)}+H_2O_{(1)}+Na_2SO_{3(1)}=2NaHSO_{3(1)}$
Regeneration: $2NaHSO_{3(1)}+n\cdot H_2O_{(1)}=SO_{2(g)}+(n+1)\cdot H_2O_{(g)}+Na_2SO_{3(s)}$ (n=a large number).

Due to precipitation of $Na_2SO_{3(s)}$ during regeneration the pH in the residual liquid is stabilized, and this facilitates the evaporation of $SO_2$.

It should be noted that for each mole of $SO_2$ absorbed, two moles of $HSO_3$-are produced in the sulphite process.

Today the sulphite process is commercially the most used process for the recovery of $SO_2$ from dilute gases. There are several reasons for this:

1. The consumption of steam in the regeneration step per ton of produced $SO_2$ is at a relatively acceptable level. With double-effect evaporation approximately 7—8 tons are required per ton of $SO_2$, and this is particularly favourable for gases of relatively low $SO_2$ content. In comparison the said citrate process normally would need about 20 tons of steam per ton of $SO_2$ for gases with 0,25 mol-% $SO_2$, although this amount can be much reduced with the use of vapour recompression.

2. The requirements for a very high purification efficiency with respect to $SO_2$ may normally be satisfied due to a relatively high pH value in the regenerated absorption solution. A regular absorption-stripping process, for instance based on Na-citrate which would have to operate at a substantially lower pH level, cannot so easily satisfy very strict clean-up requirements.

3. The sulphite process is in principle based on very simple chemical reactions. In particular, it is attractive that it generates its own buffer anion from absorbed $SO_2$, when a Na-base is added:

$$2\ NaOH+SO_2=Na_2SO_3+H_2O$$

4. The sulphite process was developed for commercial use relatively early. Such a process development is very resource demanding. The success of the sulphite process may thus have delayed the search for alternative processes.

Although successful, there are features which complicate installation and operation of the sulphite process:

a. When the process is used for gases containing oxygen, $S_{IV}$-species are lost by oxidation, e.g.

$$Na_2SO_3+1/2O_2=Na_2SO_4$$

The Na-sulphate formed must be removed from the solution, and the lost Na-sulphite must be replaced. This requires the addition of Na-base. Considerable oxidation losses, corresponding to 3—10% of absorbed $SO_2$, have been reported. Corresponding losses for the said citrate process have been reported to be less than 1—2%.

b. Selective removal of Na-sulphate from the process liquor, for instance by precipitation, is a complicated operation, and in addition to the alkali consumption with $Na_2SO_4$, it will also entail a loss of

Na-sulphite/Na-bisulphite due to incomplete selectivity. There is a limited market for $Na_2SO_4$, and deposit of this water soluble salt is problematic.

c. High concentrations of sulphite—bisulphite in all process stages give rise to undesired disproportioning reactions such as

$$6\ NaHSO_3 \rightarrow 2\ Na_2SO_4 + Na_2S_2O_3 + 2\ SO_2 + 3\ H_2O$$

and/or

$$2\ Na_2SO_3 + 2\ NaHSO_3 \rightarrow Na_2S_2O_3 + 2\ Na_2SO_4 + H_2O.$$

One remedy for reducing the $Na_2S_2O_3$ formation is to keep the concentration of said component relatively high, but this again leads to a certain reduction of the solutility of the buffer.

d. The absorption capacity of the sulphite buffer is limited due to limitations in the useful pH-range and the solubility of Na-sulphite and of Na-pyrosulphite ($Na_2S_2O_5$). (Na-bisulphite is not known in solid form, instead $Na_2S_2O_5$ is obtained as an anhydrite:

$$2\ NaHSO_3 = Na_2S_2O_5 + H_2O).$$

Below a pH of about 5.5 and above a pH of about 6.5 the buffering effect is small and rapidly decreasing, so that the acceptable pH-range for commercial operation tends to be from about 5.5 to 6.5. Also higher pH-values than 6.5 have been reported to be detrimental when the gases contain $CO_2$ ($CO_2$ absorption). This entails that the absorption liquid must be conveyed back to the absorption tower with a considerable content of bisulphite.

e. The evaporation for regenerating the absorption solution is a particularly demanding process step. The solubility of $Na_2SO_3$ (and also of $Na_2SO_4$ which will be present in a considerable concentration) drops with increasing temperature and therefore the temperature approach in heat exchangers used must be very limited since otherwise deposits will form in the exchangers. This requires very large heat exchangers and very high volumetric circulation rates for the slurry through the heat exchangers. As an example a slurry circulation of 8.64 $m^3/s$=31100 $m^3/h$ is reported when the process is used for the production of 8.7 tons of $SO_2/h$ in a 500 MW coal-fired power-plant. Furthermore, in order to meet limited periods when the regenerator system is shut down without disrupting the gas cleaning process, the absorber is often provided with large storage tanks for the feed and product liquor.

There would obviously be much to gain if said undesirable properties of the sulphite process could be reduced or eliminated in a new process, while at the same time maintaining the said desirable properties. Such a process could belong to process type 2 above or be a combination of processes in which the majority of the $SO_2$ is removed by regular absorption-stripping (process type 1) while the final removal takes place by absorption-evaporation (process type 2).

We have now found a new regenerative process for $SO_2$ absorption from gases by means of aqueous buffer solutions combined with recovery of $SO_2$ from such solutions, wherein the following advantages in comparison with known processes are offered:

1. Higher absorption capacity per unit volume of liquid.
2. More complete $SO_2$ removal from the gases.
3. Lower energy consumption for $SO_2$ recovery.
4. Less problematic regeneration of the absorption liquid.
5. Less oxidation losses.

In a comprehensive program a number of buffer systems have been tested and compared with the sulphite buffer. It was discovered that aqueous $Na_2HPO_4$—$NaH_2PO_4$ solutions combine a number of desirable properties to a surprisingly high degree. The invention utilizes the following reactions:

Absorption: $SO_{2(g)} = SO_{2(1)}$ $SO_{2(1)} + H_2O_{(1)} + Na_2HPO_{4(1)} = NaHSO_{3(1)} + NaH_2PO_{4(1)}$

Regeneration: $NaHSO_{3(1)} + NaH_2PO_{4(1)} + n \cdot H_2O = SO_{2(g)} + (n+1) \cdot H_2O_{(g)} + Na_2HPO_{4(s)}$ (n=large number).

As seen from the regeneration reaction equation the phosphate system here plays the role of a buffer within said process type 2 and could be used either alone or in combination with e.g. process type 1 as described above. In process type 1 Na-phosphate was found to be an unsuitable buffer, since it cannot stabilize pH at the relatively low pH level required. In advance there seemed to be good reason also to fear serious problems with Na-phosphate-buffers when these are used in process type 2. In the reaction equations above it is assumed that $Na_2HPO_4$ is the buffer salt which is precipitated during the evaporation. This is not obvious since we are here dealing with very concentrated and nonideal salt solutions. Thus, the concentration of $NaH_2PO_4$ may get very high already in the $SO_2$ absorption stage, for instance 2.5 M compared with 1.5 M for $Na_2HPO_4$ when a 3.0 M $Na_2HPO_4$+1.0 M $NaH_2PO_4$ buffer is used to absorb 1.5 M $SO_2$ (Example 1 and 3 below). One may fear that this situation aggravates when the solution undergoes further concentration during evaporation. If $NaH_2PO_4$ is precipitated, pH will increase and the $SO_2$ evaporation should then be hampered.

Thus, the chemical conditions encountered when a phosphate buffer is used in process type 2 were at the outset quite unclear. This may have contributed to keeping other research workers from thoroughly investigating the phosphate system for use as a buffer within process type 2. Another reason may have to do with some apparently negative test results: When measured $SO_2$ partial pressure of $SO_2$ loaded solutions at normal absorption temperatures is plotted against the $SO_2$-concentration in the solution, the curve for phosphate buffers tends to fall much below the sulphite buffer. This could be taken as an indication that the $SO_2$ evaporation from the phosphate buffer system would require much more energy which would immediately exclude this buffer as a relevant competitor.

The use of Na-phosphate as a buffer for $SO_2$-absorption is known from the literature (3). However, in the phosphate process referred to therein the regeneration procedure is completely different: $H_2S$ is added to the $SO_2$-loaded solution, utilizing the reaction

$$2H_2S+SO_2 \rightarrow 3S_{(s)}+2H_2O.$$

Thus, the process produces elementary sulphur and not $SO_2$, as in the present invention. Furthermore, in the said known process relatively dilute sodium phosphate solutions are used (about 10% by weight), and the $SO_2$ uptake in the absorption unit is typically 4—7 g/l or about 1/10 or less of the loading according to the present invention.

The starting buffer may according to the invention be a pure $Na_2HPO_4$-solution with a concentration of preferably above 1.0 mole/l. However, it has been found advantageous to use a $Na_2HPO_4$—$NaH_2PO_4$ mixture with a molar ratio in the range 30:1 to 1:1, preferably 12:1 to 2:1. Thereby the buffer curve is flattened out so that undesirable high pH values are avoided for buffers with low $SO_2$ content. In principle all $SO_2$ may then be removed from the solution during regeneration. As mentioned, this possibility does not exist with the sulphite buffer.

Very important findings in our investigations are the comparatively higher absorption capacity (in kmoles per $m^3$ of buffer solution) and the lower specific steam consumption (in tons of steam per ton of $SO_2$ stripped) that can be reached in comparison with the sulphite buffer. In particular for gases having a relatively high $SO_2$ content very much is to be gained compared with the sulphite process, since the steam consumption can be reduced as far down as to half the amount or less. At the same time considerable savings are obtained in the form of smaller equipment units.

It has also been found that the $SO_2$ content in the purified gas may more readily be reduced to values substantially below strictest requirements. The phosphate buffer solution is surprisingly easier to deplete of $SO_2$ during evaporation-crystallisation at atmospheric pressure than the sulphite buffer, despite a substantially lower $SO_2$ partial pressure curve at absorber conditions.

The oxidation losses have most surprisingly been found to be negligible in comparison with the sulphite process. With the much lower total concentration level of $S_{IV}$ compounds in the liquid in all process stages the disproportioning reactions are restrained rather effectively in comparison with the sulphite process where such concentrations are high throughout the process.

Unlike $Na_2SO_3$, $Na_2HPO_4$ and $NaH_2PO_4$ have positive temperature coefficients for their solubilities, at least as far as up to about 95°C. As long as the regeneration is carried out at temperatures around or below about 95°C there is no risk of deposit formation of the buffer salts in the heat exchangers of the evaporators as mentioned above for the sulphite system. In addition, since the oxidation losses are negligible the concentration of $Na_2SO_4$ in the circulating process liquid can be kept very low. Therefore the liquid will not reach the saturation concentration of $Na_2SO_4$ until near the end of the evaporation. The solubility of $Na_2SO_4$ has a negative temperature coefficient, and the final evaporation must therefore presumably be carried out with a small temperature approach in the heat exchanger of the evaporator. This is a disadvantage which, however, becomes modest since it will only appear near the end of the evaporation. In summary this means that relatively much more compact and cheaper equipment may be used and much less pumping energy will be required.

The invention can be illustrated by way of the following results of experiments:

A. High buffer and absorption capacities for $SO_2$.

A proper buffer should have a high buffer capacity for $SO_2$, reflected by a small slope of the buffer curve (small change in pH) over a wide $SO_2$ concentration range.

Figure 1 shows buffer curves at 55°C for

(1) 3 M $Na_2HPO_4$,
(2) 3 M $Na_2HPO_4$+0,5 M $NaH_2PO_4$,
(3) 3 M $Na_2HPO_4$+1,0 M $NaH_2PO_4$

and

(4) 1,70 M $Na_2SO_3$,

all charged with $SO_2$. The abscissa is the $SO_2$ concentration in moles per liter, and the ordinate is the pH. We have found that pH is rather difficult to measure correctly in such solutions, and the curves should therefore primarily be used for comparing the different buffers. It is striking how the phosphate buffers keep a relatively high buffer capacity over a wide range of $SO_2$ concentrations. From Figure 1 the following may also be concluded:

*The sulphite system is a poor buffer above a pH of about 6.6 and below a pH of about 5.5. This is in agreement with the above discussion.

*The three buffer curves from the phosphate system demonstrate the great flexibility of this system. By adding some $NaH_2PO_4$ to the $Na_2HPO_4$ buffer unfavorably high pH values for low $SO_2$ concentrations are avoided. It has been found that such buffers may be depleted more readily of $SO_2$ during the evaporation.

The concentrations of the buffer used as examples in Figure 1 are believed to be about as high as possible in order to be relevant for commercial installations where precipitation in the absorber due to supersaturation must be avoided.

Figure 2 illustrates experimental gas-liquid equilibrium curves for $SO_2$ in (1) 3.00 M $Na_2HPO_4$+1.00 M $NaH_2PO_4$ and in (2) 1.70 M $Na_2SO_3$ buffers at 55°C. The abscissa is the $SO_2$ concentration in moles per liter, and the ordinate is the $SO_2$ partial pressure in bar. These measurements were carried out in an equipment which is described in Section C below. Nitrogen was in these measurements used for the gas circulation circuit which equilibrates with the $SO_2$-loaded solution. The lines are broken at lower partial pressures where the measurements are less accurate. Figure 2 shows the phosphate buffer to have the higher absorption capacity for $SO_2$, which is further demonstrated by the following data read from Figure 2.

| Partial pressure at equilibrium $p^*_{SO_2}$ (bar) | $10^{-2}$ | $10^{-3}$ | $10^{-4}$ |
|---|---|---|---|
| Buffer | $\bar{C}_{SO_2}$ | (moles/l) | |
| Phosphate | 1.93 | 1.23 | 0.60 |
| Sulphite | 1.39 | 1.07 | 0.50 |
| Ratio phosphate/sulphite | 1.39 | 1.15 | 1.20 |

Over the highly relevant partial pressure range $10^{-2}$—$10^{-4}$ bar the phosphate buffer has accordingly an ability to bind 1.15 to 1.39 times more $SO_2$ per unit volume than the sulphite buffer tested. Together with the observations reported in a following section that the phosphate buffer also is more easily depleted of $SO_2$ than the sulphite buffer upon evaporation, the effective absorption capacity for the phosphate buffer is presumably even higher than indicated by these figures.

The solution fed to the absorber in the present process should suitably have a pH above 5.5, usually above 6.0, preferably above 6.2, in particular about 6.5. The solution should suitably contain at least 1.0 mole, preferably about 2 moles and particularly above 2.5 moles per liter of a dialkali hydrogen phosphate, particularly disodium hydrogen phosphate.

B. Low steam consumption and complete absorption.

a Batchwise operation.

Buffer solutions loaded with $SO_2$ to known concentrations were subjected to evaporation by boiling at atmospheric pressure in a 5 liter glass vessel equipped with 4 baffles, a stirrer and a submerged electric heating element in the form of a spiral. The escaping vapour was passed through a condenser for condensing the steam and then together with the condensate into a receiving bottle containing an aqueous $H_2O_2$ solution in which all $SO_2$ was oxidized to sulphuric acid which was then determined quantitatively by titration with standard NaOH. There were 3 receiving bottles attached in parallel via glass valves to a common tube from the condenser. This allowed the evaporation process to be followed by replacing one receiving bottle with another without disrupting the process about every 8 minutes.

The experiments were stopped when the surface of the suspension had fallen too near the top of the heating element, in order to avoid the latter to get dry (overheating).

The $SO_2$ concentration in the buffer solution was determined iodometrically. The amount of $H_2O+SO_2$ evaporated was determined by weighing. The density of the solution was determined by weighing known volumes. After the evaporation was stopped, the crystals formed in the vessel were first dissolved by adding water and then the solution was diluted to the start volume, before the $SO_2$ content, the density and the pH were measured. The following results were obtained.

Example 1

Start solution: 3000 ml
3 M $Na_2HPO_4$
1 M $NaH_2PO_4$
1.54 M $SO_2$
$\rho$=1.43 g/ml
pH=5.15

| Sample No. | 1 | 2 | 3 | 4 | 5 | 6 | 7 | 8 | 9 |
|---|---|---|---|---|---|---|---|---|---|
| $H_2O+SO_2$ evap. (g) | 110.6 | 111.9 | 114.9 | 115.1 | 113.5 | 115.5 | 113.1 | 115.2 | 112.0 |
| $SO_2$ evap. (g) | 6.39 | 6.65 | 6.74 | 6.93 | 6.90 | 7.23 | 7.24 | 7.54 | 7.60 |
| $S\left(\frac{g\ H_2O-evap.}{g\ SO_2\ evap.}\right)$ | 16.3 | 15.8 | 16.0 | 15.6 | 15.4 | 15.0 | 14.6 | 14.3 | 13.7 |

| Continued | 10 | 11 | 12 | 13 | 14[1] | 15 | 16 | 17 | 18 | 19[2] |
|---|---|---|---|---|---|---|---|---|---|---|
| | 114.4 | 112.8 | 112.0 | 109.9 | 112.0 | 109.3 | 114.3 | 113.5 | 120 | 12.2 |
| | 7.93 | 8.13 | 8.35 | 8.47 | 8.92 | 9.20 | 10.61 | 12.05 | 14.94 | 1.66 |
| | 13.5 | 12.9 | 12.4 | 12.0 | 11.6 | 10.9 | 9.8 | 8.4 | 7.0 | 6.3 |

[1] Crystallization started 110 min. after start.
No incrustation of the heating element observed.
[2] Heating stopped after sample no. 18.

Mass balances:

| | | |
|---|---|---|
| Total weight including vessel: | Before evaporation | 8785 g |
| | After evaporation | 6721 g |
| Difference=evaporated $SO_2+H_2O$: | | 2064 g |
| Sum of all samples of evaporated $H_2O+SO_2$: | | 2051.9 g |

(The discrepancy is within a reasonable error of analysis).

| | | |
|---|---|---|
| $SO_2$ at start $1.54 \cdot 3 \cdot 64.1$ | = | 296.1 g |
| Sum $SO_2$ all samples | (a) | 153.5 g |
| $SO_2$ remaining after evaporation | (b) | 141.4 g |
| Sum (a)+(b) | | 294.9 g |

(The discrepancy is within a reasonable error of analysis).

| | |
|---|---|
| pH in rest solution after dilution as explained | 5.83 (55°C) |
| Density of same solution | 1.40 g/ml |
| $SO_2$ concentration in same solution | 0.72 M |

Comparative example

Start solution:
3000 ml
1.70 M $Na_2SO_3$
1.23 M $SO_2$
$\rho=1.19$
pH=5.40

| Sample No. | 1 | 2 | 3 | 4 | 5 | 6 | 7 | 8 |
|---|---|---|---|---|---|---|---|---|
| $H_2O+SO_2$ evap. (g) | 107.4 | 109.3 | 126.1 | 110.4 | 122.8 | 113.5 | 121.1 | 115.7 |
| $SO_2$ evap. (g) | 2.19 | 2.56 | 2.96 | 2.64 | 2.99 | 2.80 | 3.08 | 3.00 |
| $S(\frac{g\ H_2O-evap.}{g\ SO_2\ evap.})$ | 48.0 | 41.7 | 41.6 | 40.8 | 40.1 | 39.5 | 38.4 | 37.6 |

| Continued 9 | 10 | 11[1] | 12 | 13 | 14 | 15 | 16 | 17 |
|---|---|---|---|---|---|---|---|---|
| 118.5 | 113.1 | 118.3 | 112.7 | 116.8 | 113.2 | 116.7 | 114.0 | 119.6 |
| 3.16 | 3.08 | 3.37 | 3.58 | 4.49 | 5.43 | 7.13 | 8.65 | 11.26 |
| 36.5 | 35.7 | 34.1 | 30.5 | 25.0 | 19.8 | 15.4 | 12.1 | 9.6 |

1) Crystallization started 80—85 min. after start.
The crystals were observed to form on the heating element.

Mass balances:

| | | |
|---|---|---|
| Total weight including vessel: | Before | 8055 g |
| | After | 6065 g |
| | Difference | 1990 g |
| Weight of all samples | | 1969.3 g |

(The discrepancy is within a reasonable error of analysis).

| | | |
|---|---|---|
| $SO_2$ at start $1.23 \cdot 3 \cdot 64.1$ | = | 236.5 g |
| Sum of $SO_2$ in all samples | (a) | 72.4 g |
| $SO_2$ remaining after evaporation | (b) | 155.1 g |
| Sum (a)+(b) | | 227.5 g |
| Loss of $SO_2$: | 236.5—227.5= | 9.0 g |

Part of this loss can be explained by $SO_2$ escaping as gas when the vessel was opened after the evaporation.

| | |
|---|---|
| pH in rest solution after dilution as explained | 5.94 (55°C) |
| Density of same | $\rho=1.18$ g/ml |
| $SO_2$ concentration in same | 0.80 M |

Conclusions.

The results of the batch evaporation experiments allow the following conclusions, referring to the conditions of the experiments:

— The energy (steam) consumption for driving off $SO_2$ from clear solutions of phosphate buffer is about 1/3 the consumption for clear sulphite solutions. This is surprising, since from the $SO_2$ gas-liquid equilibrium data at hand referring to 55°C, one would rather expect the phosphate buffer to require distinctly more energy than the sulphite buffer (Figure 2).

— When the crystallization starts the steam consumption drops for both buffers.

— Evaporation with crystallization is problematic with the sulphite buffer because of its tendency to form deposit on the heating element. This problem was not seen with the phosphate buffer.

β Semicontinuoûs operation.

An $SO_2$ containing buffer solution was by means of a metering pump conveyed to a 500 ml glass flask serving as a boiler and heated from the outside for evaporating a $SO_2$-steam mixture at atmospheric pressure, with simultaneous crystallization of the basic buffer component $Na_2HPO_4$. The experiments were carried out semicontinuously by allowing the crystals with mother liquor to accumulate in the boiler. The vapour was first passed through a condenser for condensation of steam and then together with the condensate down into an aqueous $H_2O_2$ solution, in which all $SO_2$ was odizied to sulphuric acid which was then determined quantitatively by titration with standard NaOH. The evaporation procedure was followed by very quickly replacing the $H_2O_2$ bottle every 30 minutes.

Before starting the pump the boiler was charged with a $SO_2$-free buffer which was subjected to evaporation. The experiments were stopped when the stirrer could not function properly because of too much and too thick slurry.

The $SO_2$ concentrations in the liquid feed were determined iodometrically, and the total liquid volume charged was determined by weighing and container with feed liquid before and after the experiment and by density measurements.

The $SO_2$ content in the slurry remaining in the boiler after the experiment had been terminated, was determined iodometrically after addition of water and dissolution of the crystal mass to a known volume.

The supply from the pump was controlled with a rotameter calibrated with pure water. Due to deviations in specific density and viscosity between water and the buffer solutions the stated supply rates should only be taken as indications.

Example 2

Start solution: 250 ml
1.4 M $NaH_2PO_4$
1.4 M $Na_2HPO_4$

To the start solution 20 ml of water was added, and the resulting solution was evaporated until crystals started to form. Then 15 g of $Na_2HPO_4 \cdot 2H_2O$ crystals were added, and the pump was started.

Feed solution: 3 M $Na_2HPO_4$
1 M $NaH_2PO_4$
1.50 M $SO_2$
pH=5.10
ρ=1.428 g/ml

| Sample No. | 1 | 2 | 3[1] | 4 | 5 | 6 | 7[2] | 8 | 9[3] |
|---|---|---|---|---|---|---|---|---|---|
| Feed rate, approx. (ml/min.) | 5.0 | 2.2 | 3.0 | 6.5 | 5.0 | 3.0 | 3.0 | 5.0 | 5.0 |
| $H_2O+SO_2$ evap. (g) | 125.8 | 123.6 | 115.6 | 101.6 | 122.9 | 120.0 | 118.9 | 106.6 | 33.4 |
| $SO_2$ evap. (g) | 4.2 | 11.45 | 13.3 | 8.3 | 10.3 | 11.94 | 12.70 | 10.94 | 3.61 |
| $S\left(\frac{g\ H_2O-evap.}{g\ SO_2\ evap.}\right)$ | 28.9 | 9.78 | 7.70 | 11.2 | 10.91 | 9.05 | 8.36 | 8.95 | 8.25 |

[1] The feed rate was increased from 3 to 7 ml/min. the last 10 min. of this sampling period in order to reduce the density of the slurry.
[2] The feed rate was increased from 3.0 to 5.0 ml/min. the last 15 min.
[3] The feed was stopped after 5 min. and the sampling was terminated.

Comments to Example 2.

Material balance:

Total feed of $SO_2$ buffer: 1.151 l
Total amount of $SO_2$ in feed: $1.151 \cdot 1.50 \cdot 64.1=110.67$ g
Total amount of $SO_2$ evaporated (Samples 1—9): 86.74 g
Calculated amount of $SO_2$ remaining in evaporator: 23.76 g
Amount of $SO_2$ remaining in evaporator found by analysis (residue): 25.3 g
(The discrepancy is within a reasonable error of analysis).

Residue of $SO_2$ found as equivalent concentration in the feed liquid="regenerated" buffer solution: 25.3/1.151 · 64.1=0.34 M

Corresponding pH according to Figure 1 at 55°C: about 6.35

The steam consumption S=8—9 tons per ton of $SO_2$ may with double effect evaporation presumably be reduced to S=5—6 tons per ton $SO_2$. This compares with the 7—8 tons per ton $SO_2$ referred to above for the sulphite process.

Interpolation of the gas-liquid-equilibrium data in Figure 2 gives the following $SO_2$ partial pressures at equilibrium, $p^*_{SO_2}$:

| $C_{SO_2}$ moles/l | $p^*_{SO_2}$ (bar), 55°C |
|---|---|
| 0.34 | <0.00004 |
| 1.50 | 0.0024 |

The absorption unit will often be operated at about 55°C. From these equilibrium pressures it may be concluded that 1.50 M $SO_2$ in the buffer solution may be obtained with relatively low partial pressures of $SO_2$ of the feed gas, and that even with as much as 0.34 M $SO_2$ in the feed solution to the absorber, it may be possible to obtain a surprisingly complete $SO_2$ absorption.

The remaining content of $SO_2$ in the liquid after the evaporation can presumably be brought down to a considerably lower value than the value of 0.34 M found herein, when a regular continuous crystallizer is used. This will make it possible to obtain an even more complete absorption.

Comparative Example.

Start solution in evaporator: 0.25 l
1.33 M $Na_2SO_3$

74.02 g of $H_2O$ was evaporated, and the feed pump was started before any crystals had precipitated.

Feed solution: 1.70 M $Na_2SO_3$
1.25 M $SO_2$
ρ=1.21 g/ml
pH=5.38

| Sample No. | 1[1] | 2 | 3 | 4 | 5 | 6[2] | 7 | 8 | 9[3] |
|---|---|---|---|---|---|---|---|---|---|
| Feed rate, approx. (ml/min.) | 6.5 | 7.0 | 7.0 | 6.5 | 6.5 | 6.5 | 6.5 | 6.5 | 6.5 |
| $SO_2+H_2O$ evap. (g) | 129.5 | 139.7 | 139.9 | 141.0 | 145.4 | 144.8 | 145.2 | 147.6 | 132.2 |
| $SO_2$ evap. (g) | 0.22 | 1.71 | 4.49 | 7.07 | 9.33 | 10.48 | 11.05 | 11.57 | 10.84 |
| S(g $H_2O$/g $SO_2$) | 588 | 80.7 | 30.2 | 18.9 | 14.6 | 12.8 | 12.1 | 11.8 | 11.2 |

[1] Crystallization starts after 10 min.
[2] Strongly yellow colour of the suspension
[3] The feed pump stopped after 15 min. Vigorous boiling.
Heating element turned off after 25 min.

At the end of the suspension was extraordinary viscous and had a total volume of about 0.5 l. The crystals were dissolved by addition of water to a volume of 2 l. pH measured in the resulting solution=6.45 (55°C).

Further data for the experiment were as follows:

Evaporated $SO_2$ according to samples 1—9: 66.76 g=1.04 moles
Total weight of feed: 1730 g
Volume of feed: 1.730/1.21=1.430 l
$SO_2$ added with feed: 1.43 · 1.25=1.79 moles
$Na_2SO_3$ added with feed: 1.43 · 1.70=2.43 moles
$Na_2SO_3$ in the start solution: 1.33 · 0.25=0.33 moles
$SO_2+Na_2SO_3+NaHSO_3$ in evaporator at the termination: 3.43 moles
$SO_2$ remaining in evaporator as equivalent concentration in regenerated buffer:

$$(3.43-(2.43+0.33))/1.430=0.47 \text{ M}$$

S-balance:
Calculated from S-containing material added ($SO_2$ and $Na_2SO_3$):

$$1.79+2.43+0.33=4.55 \text{ moles}$$

Calculated on the basis of evaporated $SO_2$ and residue of S-containing material in the evaporator;

$$1.04+3.43=4.47 \text{ moles}$$

The discrepancy is within reasonable analysis error.

The high values for the initial specific steam consumption is due to the high pH in the start solution. Presumably close to stable conditions with S=11−12 g/g were not attained until sample No. 7.

The pH values of the start and regenerated solutions are in good conformity with the information given above for commercial plants. This also applies to the concentrations of $Na_2SO_3$ and $SO_2$.

Interpolation of the gas-liquid equilibrium data for $SO_2$ at 55°C in Figure 2 gives the following $SO_2$ equilibrium partial pressures, $p^*_{SO_2}$:

| $C_{SO_2}$ mol/l | $p^*_{SO_2}$ (bar), 55°C |
|---|---|
| 0.47 | 0.0001 |
| 1.25 | 0.0025 |

The absorption unit will often operate at about 55°C. From these data it is then derived that 1.25 M $SO_2$ in the loaded buffer requires a rather high $SO_2$ partial pressure in the feed gas. Also the partial pressure of 0.0001 bar in the regenerated buffer is well above the German norm for clean-up of 0.00014 bar for large boilers.

Conclusions.

The results show substantially lower S-values for the phosphate than for the sulphite buffer, 8—9 compared to 11—12 tons of steam/ton of $SO_2$. This is in contradiction to the higher $SO_2$ partial pressures of the sulphite buffer at 55°C. Thus, these experiments indicate that $SO_2$ is surprisingly easier to liberate from the phosphate buffer than from the sulphite buffer upon boiling at atmospheric pressure.

At 55°C the $SO_2$ partial pressure in the regenerated phosphate buffer is only about 1/3 of the partial pressure of $SO_2$ in regenerated sulphite buffer. This would make the phosphate system better suited than the sulphite system when extremely low residual content of $SO_2$ in the purified gas is required.

C. Low oxidation losses.

A gas-circulation circuit illustrated in Figure 3 comprised a gas-scrubbing bottle A, a teflon membrane pump B, a gas absorption bottle C, and a glass tube D. The circulation circuit was connected to an oxygen-filled gas cylinder E, through a reduction valve F, for constant supply pressure. Before the experiment the circulation circuit was filled with oxygen, and the gas scrubbing bottle A was charged with a known volume of buffer solution charged with $SO_2$.

By adjusting the three way valves H the gas flow could be directed through alternatively (a) the tube D and the gas scrubbing bottle A or (b) the tube D and the absorption bottle C.

The oxidation experiment was started by starting the pump B to circulate the oxygen gas through the buffer in bottle A.

The experiment was stopped by stopping the pump. The $SO_2$ content of the absorption bottle A was determined iodometrically before and after the experiment. The $SO_2$ content in the gas phase in the gas circulation circuit of known volume, was determined after the experiment by standard base titration after absorption in an aqueous $H_2O_2$ solution in the bottle C. The whole apparatus was kept at a constant temperature.

100 ml of buffer solution was used for each experiment. All experiments were carried out at 60°C and 1 atm. total pressure.

The oxidation losses were calculated from the following formula:

$$\% \text{ oxidized} = \frac{n^{\circ}_{start} - (n^{\circ}_{end} + n_{gas})}{n_{SO_2,\ start}} \cdot 100$$

where

$n^{\circ}_{start}$=total no. of moles of $S^{IV}$-compounds ($Na_2SO_3$, $NaHSO_3$ and $SO_2$) in buffer at start

$n^{\circ}_{end}$=do. after oxidation

$n_{gas}$=no. of moles of $SO_2$ present in the gas volume after oxidation

$n_{SO_2,\ start}$=no. of moles of $SO_2$ a ed to buffer before start.

The following results were obtained:

| Oxidation time, min. | 30 | 60 |
|---|---|---|
| Oxidation loss %: | | |
| Phosphate buffer | 0.9 | 0.9 |
| Sulphite buffer | 8.7 | 23.1 |

The buffer composition at the start was:

Phosphate buffer

3.00M $Na_2HPO_4$+1.00M $NaH_2PO_4$+0.50M $Na_2SO_4$+1.50M $SO_2$ pH=5.20

Sulphite buffer

1.70M $Na_2SO_3$+0.50M $Na_2SO_4$+1.22M $SO_2$ pH=5.30

The oxidation in the sulphite system is seen to be very substantial, whereas the oxidation in the phosphate system is so small that it is considered to be insignificant. This is supported by the following observations:

By closing the valve F during the oxidation experiment the oxygen uptake by the buffer in bottle A due to oxidation could be followed visually by observing the movement of the liquid level in the manometer G. For the sulphite system the level moved rather rapidly. For the phosphate system there was no observable change of the level even after 5 min. This indicates that only the sulphite system exhibited significant oxidation.

Literature:

(1) Erga, O.
$SO_2$ recovery by sodium citrate solution scrubbing Chem. Eng. Sci. *35* 162—169 (1980)

(2). Nato CCMS Study.
Phase 1.2. Status report on the sodium sulfite scrubbing flue gas desulfurization process. March 1978.
Pedco Environmental, Cincinati, Ohio.
Contract No. 68—01—4147.

(3) Eldring, A. K.
The Stauffer $SO_2$ abatement system.
In: I. Chem. E. (London) Symposium No. 57
"The Control of Sulphur and other Gaseous Emissions", Salford, April 1979, p J1—J20.

**Claims**

1. Process for the purification of $SO_2$ containing gases by means of an aqueous absorption solution and regeneration of this solution, characterized by the combination of using an absorption solution containing a phosphate buffer and removing $SO_2$ from the absorption solution together with water by evaporation.

2. The process of claim 1, characterized by using an aqueous absorption solution which is added to the absorption unit with a pH of above 6.0, preferably above 6.2, in particular about 6.5.

3. The process of any of claims 1 and 2, characterized by using an aqueous absorption solution containing at least 2.0 moles of disodiumhydrogen phosphate per litre.

4. The process of claim 3, characterized by using an absorption solution containing $Na_2HPO_4$ and $NaH_2PO_4$ in a molar ratio of 12:1 to 2:1.

5. The process of any of claims 1—4, characterized by adding seed crystals of the base form of the buffer to the absorption solution after the absorption and during the evaporation, and further evaporation takes place from the thereby obtained suspension.

6. The process of any of claims 1—4, characterized in that the base form of the buffer is precipitated in solid form during the evaporation while at the same time $SO_2$ is evaporated, and precipitated base form is removed and reused for absorption.

7. The process of claim 6, characterized in that absorption of $SO_2$ in an absorption unit, transfer of the absorption solution to an evaporator, evaporation of water together with $SO_2$ and simultaneous precipitation of the base form of the buffer used, removal of crystals with mother liquor from the suspension, addition of water to dissolve the crystals and recycling of the resulting buffer solution to the absorption unit, are carried out as a continuous process.

8. The process of claim 7, characterized in that the removed crystals with mother liquor are subjected to separation, the mother liquor is recycled to the evaporator, the crystals are dissolved in water, and the resulting buffer is recycled to the absorption unit.

9. The process of claim 7 and 8, characterized in that the evaporation takes place in two or more steps in which the vapour from one step is used as heating medium in a subsequent step.

**Patentansprüche**

1. Verfahren zur Reinigung von $SO_2$ enthaltenden Gasen mittels einer wäßrigen Absorptionslösung und Regenerierung dieser Lösung, gekennzeichnet durch die Kombination der Verwendung einer Absorptionslösung, die einen Phosphatpuffer enthält, und Entfernen des $SO_2$ aus der Absorptionslösung zusammen mit Wasser durch Verdampfen.

2. Verfahren gemäß Anspruch 1, dadurch gekennzeichnet, daß eine wäßrige Absorptionslösung verwendet wird, die zu de Absorptionseinheit mit einem pH von oberhalb 6,0, vorzugsweise oberhalb 6,2 insbesondere etwa 6,5 zugesetzt wird.

3. Verfahren gemäß den Ansprüchen 1 und 2, dadurch gekennzeichnet, daß eine wäßrige Absorptionslösung verwendet wird, die mindestens 2,0 Mol Dinatriumhydrogenphosphat per Liter enthält.

4. Verfahren gemäß Anspruch 3, dadurch gekennzeichnet, daß eine Absorptionslösung verwendet wird, die $Na_2HPO_4$ und $NaH_2PO_4$ in einem Molverhältnis von 12:1 bis 2:1 enthält.

5. Verfahren gemäß einem der Ansprüche 1 bis 4, dadurch gekennzeichnet, daß der Absorptionslösung nach der Absorption und während der Verdampfung Impfkristalle der Basenform des Puffers zugesetzt werden und die weitere Verdampfung aus der so erhaltenen Suspension stattfindet.

6. Verfahren gemäß einem der Ansprüche 1 bis 4, dadurch gekennzeichnet, daß die Basenform des Puffers in fester Form während der Verdampfung ausgefällt wird, während gleichzeitig $SO_2$ verdampft wird und die ausgefällte Basenform entfernt und zur Absorption wiederverwendet wird.

7. Verfahren gemäß Anspruch 6, dadurch gekennzeichnet, daß die Absorption des $SO_2$ in einer Absorptionseinheit, Überführung der Absorptionslösung zu einem Verdampfer, Verdampfung des Wassers zusammen mit $SO_2$ und gleichzeitige Ausfällung der Basenform des verwendeten Puffers, Entfernung der Kristalle mit der Mutterlauge aus der Suspension, Zugabe des Wassers zur Auflösung der Kristalle und Zurückführung der entstandenen Pufferlösung zu der Absorptionseinheit, als kontinuierliches Verfahren durchgeführt werden.

8. Verfahren gemäß Anspruch 7, dadurch gekennzeichnet, daß die entfernten Kristalle mit Mutterlauge der Abtrennung unterworfen werden, die Mutterlauge zu dem Verdampfer zurückgeführt wird, die Kristalle in Wasser gelöst werden und der entstandene Puffer zu der Absorptionseinheit zurückgeführt wird.

9. Verfahren gemäß Anspruch 7 und 8, dadurch gekennzeichnet, daß die Verdampfung in zwei oder mehr Schritten durchgeführt wird, wobei der Dampf von dem einen Schritt als Erhitzungsmedium in einem folgenden Schritt verwendet wird.

**Revendications**

1. Procédé de purification de gaz contenant du $SO_2$ à l'aide d'une solution d'absorption aqueuse et d'une régénération de cette solution, caractérisé par la combinaison de l'emploi d'une solution d'absorption contenant un tampon au phosphate et de l'élimination du $SO_2$ de la solution d'absorption en même temps que de l'eau par évaporation.

2. Procédé suivant la revendication 1, caractérisé par l'emploi d'une solution d'absorption aqueuse que l'on introduit dans l'unité d'absorption avec un pH supérieur à 6,0, de préférence supérieur à 6,2, en particulier d'environ 6,5.

3. Procédé suivant l'une quelconque des revendications 1 et 2, caractérisé par l'emploi d'une solution d'absorption aqueuse contenant au moins 2,0 moles de phosphate hydrogéné disodique par litre.

4. Procédé suivant la revendication 3, caractérisé par l'emploi d'une solution d'absorption contenant $Na_2HPO_4$ et $NaH_2PO_4$ en un rapport molaire de 12:1 à 2:1.

5. Procédé suivant l'une quelconque des revendications 1 à 4, caractérisé par l'addition de cristaux d'ensemencement de la forme base du tampon à la solution d'absorption après l'absorption et au cours de l'évaporation, et une évaporation plus poussée a lieu à partir de la suspension ainsi obtenue.

6. Procédé suivant l'une quelconque des revendications 1 à 4, caractérisé en ce que la forme base du tampon est précipitée sous forme solide au cours de l'évaporation, tandis que le $SO_2$ s'évapore en même temps, et la forme base précipitée est enlevée et réutilisée en vue de l'absorption.

7. Procédé suivant la revendication 6, caractérisé en ce que l'absorption du $SO_2$ dans une unité d'absorption, le transfert de la solution d'absorption dans un évaporateur, l'évaporation de l'eau en même temps que celle du $SO_2$ et la précipitation simultanée de la forme base du tampon utilisé, l'enlèvement des cristaux avec la liqueur mère de la suspension, l'addition d'eau pour dissoudre les cristaux et le recyclage de la solution tampon obtenue à l'unité d'absorption, se réalisent sous forme d'un procédé continu.

8. Procédé suivant la revendication 7, caractérisé en ce que les cristaux enlevés avec la liqueur mère sont soumis à séparation, la liqueur mère est recyclée à l'évaporateur, les cristaux sont dissous dans l'eau et le tampon ainsi obtenu est recyclé à l'unité d'absorption.

9. Procédé suivant les revendications 7 et 8, caractérisé en ce que l'évaporation a lieu en deux ou plus de deux étapes, au cours desquelles la vapeur d'une étape est utilisée comme milieu de chauffage pour l'étape suivante.

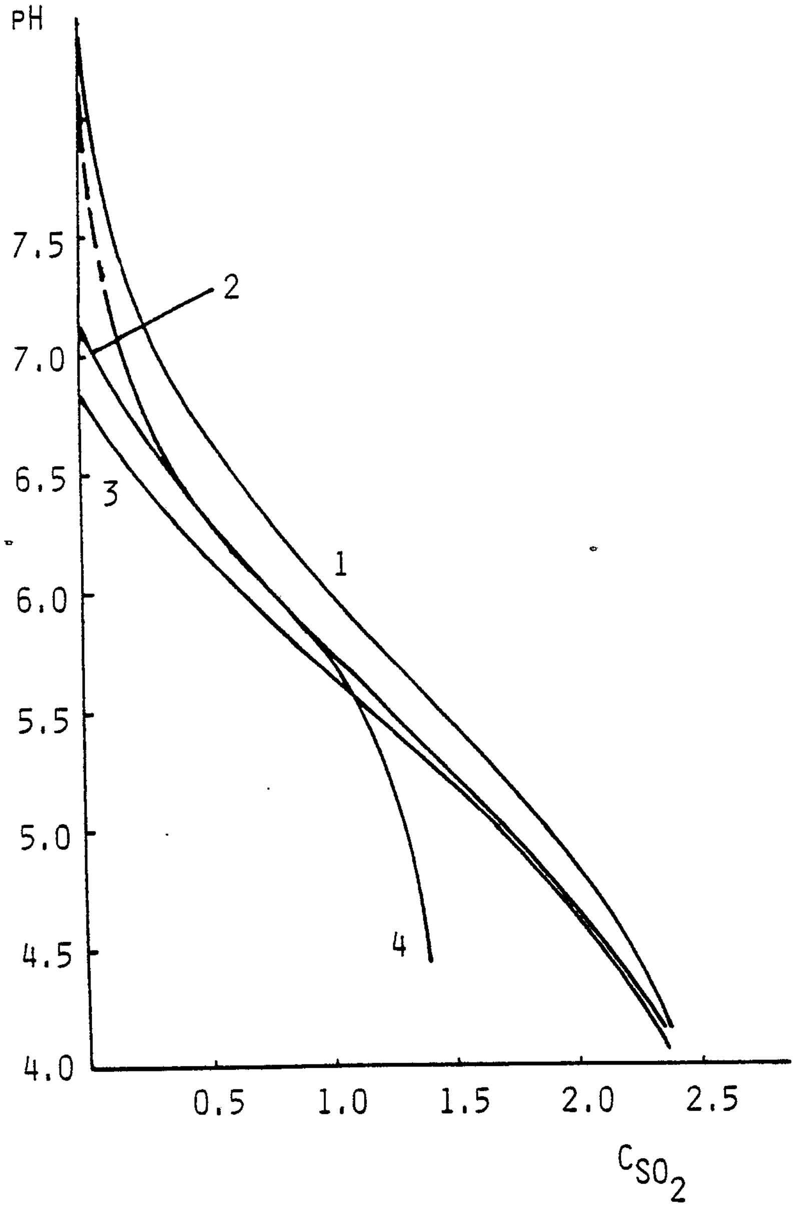


FIG. 1

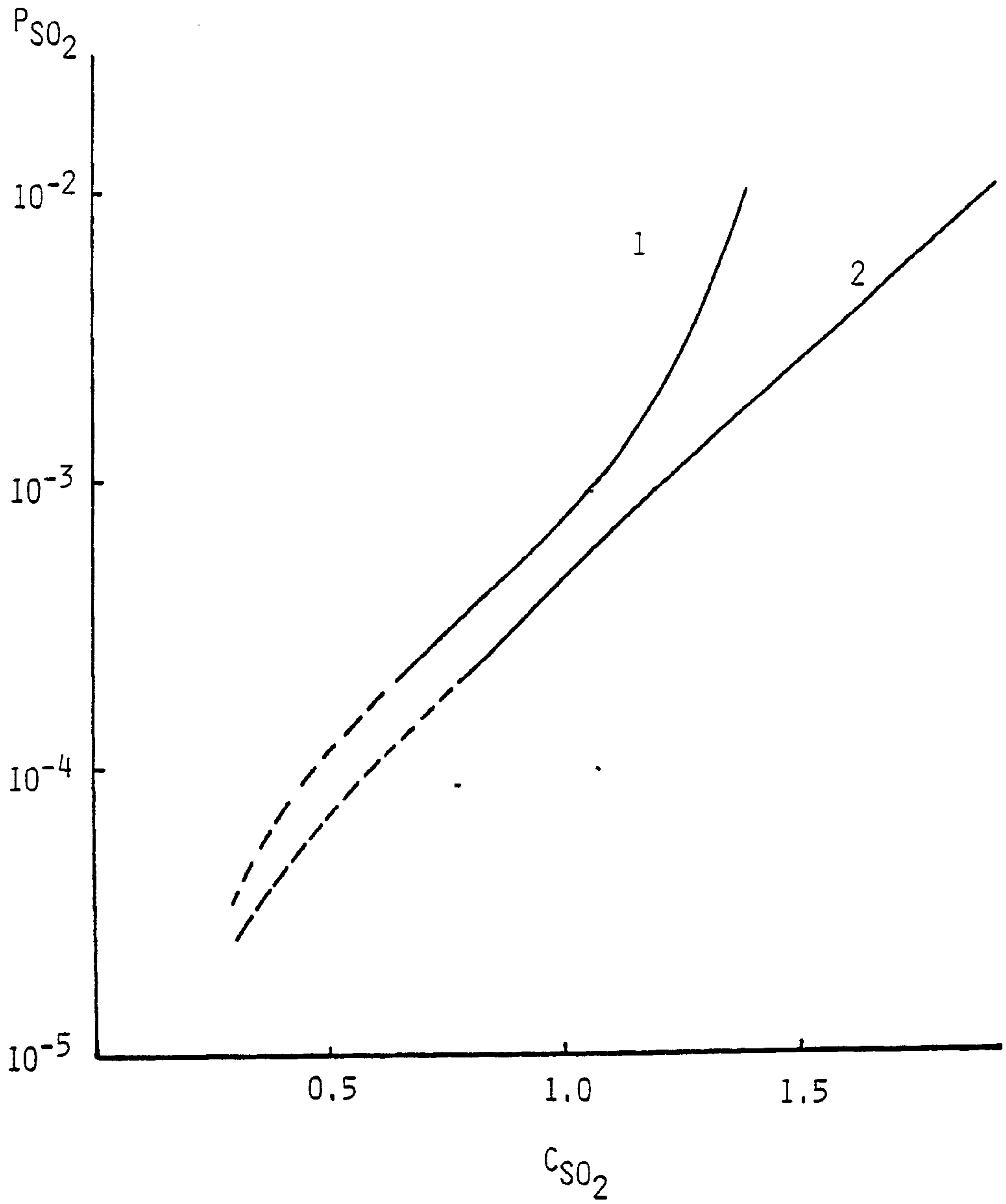


FIG. 2

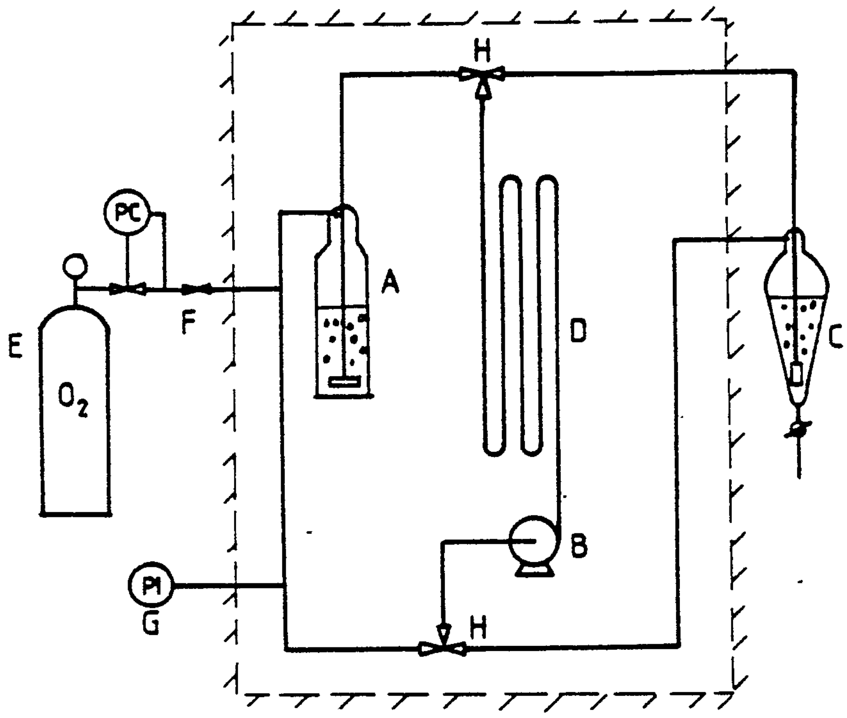


FIG. 3